# FASCICULE DE BREVET EUROPEEN

(11) **EP 0 470 880 B1**
(45) Date de publication et mention de la délivrance du brevet: **30.10.1996**
(21) Numéro de dépôt: 91402069.8
(22) Date de dépôt: 24.07.1991
(51) Int. Cl.: G06F 11/20, G06F 15/16

(54) **Dispositif pour l'échange dynamique de processeur de service**
Vorrichtung zum dynamischen Dienstprozessorwechsel
Apparatus for service processor dynamic swapping

(30) Priorité: 09.08.1990 FR 9010180
(43) Date de publication de la demande: 12.02.1992
(73) Titulaire: BULL S.A., 92800 Puteaux (FR)
(72) Inventeur: Bonnafoux, Jean-François, F-60260 Lamorlaye (FR); Flon, Robert, F-78000 Versailles (FR)
(74) Mandataire: Colombe, Michel

(56) Documents cités:
- EP-A- 0 083 422
- EP-A- 0 216 353
- EP-A- 0 348 293
- EP-A- 0 445 034
- US-A- 4 014 005
- US-A- 4 894 828
- IBM TECHNICAL DISCLOSURE BULLETIN. vol. 29, no. 4, septembre 1986, NEW YORK US page 1614 "ASYMMETRIC MULTIPROCESSING SYSTEM"
- IBM TECHNICAL DISCLOSURE BULLETIN. vol. 29, no. 4, septembre 1986, NEW YORK US page 1631 "DUAL SERVICE PROCESSOR BACKUP SYSTEM"

## Description

La présente invention concerne une architecture pour échange dynamique de processeur de service.

Dans une configuration redondante d'un système, il y a deux processeurs de service : l'un est le tenant, c'est celui qui exécute les fonctions de service à un instant donné ; l'autre est celui de secours disponible pour exécuter les fonctions de service au cas où le tenant viendrait à défaillir. Comme les matériels deviennent de plus en plus fiables, le processeur de service de secours n'est pas très souvent sollicité (il reste cependant utile pour une disponibilité du système avoisinant les 100 %). Le processeur de service de secours est donc inutilisé la plupart du temps.

Pour améliorer l'opérabilité globale du processeur de service, on veut utiliser le processeur de service de secours, dans ses moments de non activité, nm pas en tant que tel, mais en tant qu'écran pour donner la possibilité à un opérateur d'opérer une fonction de service à partir de l'écran du tenant et à un autre opérateur d'opérer une autre fonction de service à partir de l'écran du processeur de service de secours.

Cela est possible si l'on dispose d'un environnement multi-tâche, multi-fenêtrage du type WINDOWS, qui permet d'associer à chaque fonction de service une fenêtre.

Si de plus, on adopte l'architecture proposée dans le brevet, il suffit de faire tourner la présentation d'un service dans celui de secours pour opérer le service à partir de l'écran et du clavier du processeur de service de secours. Si celui-ci vient à défaillir, la présentation est dynamiquement transférée dans le processeur de service tenant sans interruption du service.

Par ailleurs, si la description d'un système est connue à travers une table, il est nécessaire que le processeur de service connaisse cette table pour procéder aux opérations de service : initialisation du système, reconfiguration du système.

On pourrait configurer le disque du processeur de service en copiant la table de configuration du système dans un de ses fichiers. L'inconvénient majeur d'une telle solution réside dans le fait que le processeur de service devient dépendant du système. En particulier, on ne peut pas procéder à un "échange standard" de processeur de service. Il faut procéder à une configuration après échange.

Un premier but de l'invention est de proposer un dispositif permettant un échange dynamique de processeur de service, tel que revendiqué dans la revendication 1.

Ce but est atteint par le fait que le dispositif, permettant un échange dynamique de processeur de service, comporte un premier processeur de service relié par un réseau et une unité de maintenance du système central (CMU) à un système central (4), ledit processeur de service (1) est relié à un deuxième processeur de service (2) de réserve par le réseau et l'unité de maintenance (CMU) est caractérisé en ce que chaque processeur de service comporte en plus des programmes de système d'exploitation, un programme superviseur et au moins un service décomposé en deux applications, l'une "corps" composée de l'algorithme du programme, l'autre "présentation" comportant l'interface avec l'opérateur permettant un affichage du type à fenêtres avec une barre de menu, et des moyens (MSH 10, 20) de traitement des communications avec les autres processeurs de service, par l'intermédiaire de l'unité de maintenance (CMU), un programme superviseur gérant les numéros d'instance des services et démarrant les services, ledit programme superviseur ayant accès à une table de configuration du système,

l'unité de maintenance comprend une mémoire vive (400) qui communique par l'intermédiaire du système central avec un moyen de stockage du système central, qui contient la table de configuration du système IRT (table d'installation des ressources), et en ce que le superviseur du processeur de service tenant et du processeur de service de réserve contient une routine (LBCAM) de méthode d'accès à l'unité de maintenance (CMU) pour accéder à la table de configuration du système contenue dans le moyen de stockage du système central, la tranférer dans son propre disque (16) et la charger dans la mémoire vive de l'unité de maintenance.

Les caractéristiques du préambule de la revendication 1 sont connues du document US-A-4 894 828.

Selon une autre caractéristique, le dispositif est caractérisé en ce que le programme superviseur du processeur de service de réserve contient une routine pour, en cas de défaillance signalée par un événement envoyé par l'unité de maintenance (CMU) au processeur de service de réserve, lancer le programme superviseur du processeur de service de réserve, et par la routine de méthode d'accès (LBCAM) effectuer la lecture de la table de configuration (IRT, ECF) dans la mémoire vive (400) de l'unité de maintenance pour la recopier dans le disque dur (26) du processeur de service de réserve (2).

Selon une autre caractéristique, la mémoire vive est divisée en deux parties ; une première accessible uniquement par un processeur de l'unité de maintenance (CMU), une seconde, (MSP), accessible uniquement par le coprocesseur de l'unité de maintenance (CMU), en exécution de messages envoyés par la routine de méthode d'accès à l'unité de maintenance (CMU) lancée par un service tournant sur le processeur de service.

Selon une autre caractéristique, la seconde partie (MSP) de la mémoire de l'unité de maintenance (CMU) est divisée en trois zones :
- une première contenant un mot indiquant la longueur actuelle de la mémoire ;
- une deuxième zone répertoire contenant les étiquettes des données ;
- une troisième zone contenant les données.

Selon une autre caractéristique, les étiquettes de la deuxième zone comprennent le nom du fichier, son espace alloué, sa date de création, sa taille actuelle ;
une information indiquant si l'espace alloué est fixe ou variable ;
et un drapeau, dont la valeur 1 indique une session d'écriture non valablement exécutée.

Selon une autre caractéristique, la routine de la méthode d'accès affiche le message "fichier non trouvé" dans le cas où le drapeau était à la valeur 1 et procède à la recopie du fichier, soit de la CMU dans le disque, soit en sens inverse.

Selon une autre caractéristique, la routine de la méthode d'accès affiche le message "fichier inconnu" dans le cas où le nom du fichier n'existe pas dans le répertoire de l'unité de maintenance (CMU) et procède à sa recopie s'il existe dans le disque du processeur de service.

Selon une autre caractéristique, les fichiers gérés par la méthode d'accès de l'unité de maintenance (CMU) sont recopiés du disque dur vers la mémoire vive de l'unité de maintenance (CMU) lorsque la plaque d'interface matériel a été mise hors tension.

Selon une dernière caractéristique, les fichiers gérés par la méthode d'accès de l'unité de maintenance (CMU) sont recopiés de la mémoire vive de l'unité de maintenance (CMU) vers le disque dur d'un processeur de service lorsqu'un processeur de service est initialisé.

D'autres caractéristiques et avantages apparaîtront à la lecture de la description ci-après faite en référence aux dessins annexés, dans lesquels :
- la figure 1 représente un schéma d'ensemble du système ;
- la figure 2 représente les moyens matériels et des logiciels mettant en communication certaines parties du système ;
- la figure 3 représente le principe de l'architecture de communication et de présentation utilisée dans l'invention lequel principe a été revendiqué dans la demande de brevet EP-A-0 445 034, BULL S.A. ;
- la figure 4 représente le schéma d'architecture des logiciels nécessaires à la mise en oeuvre de l'invention ;
- la figure 5 représente le schéma de principe de l'architecture matérielle nécessaire à la mise en oeuvre de l'invention.

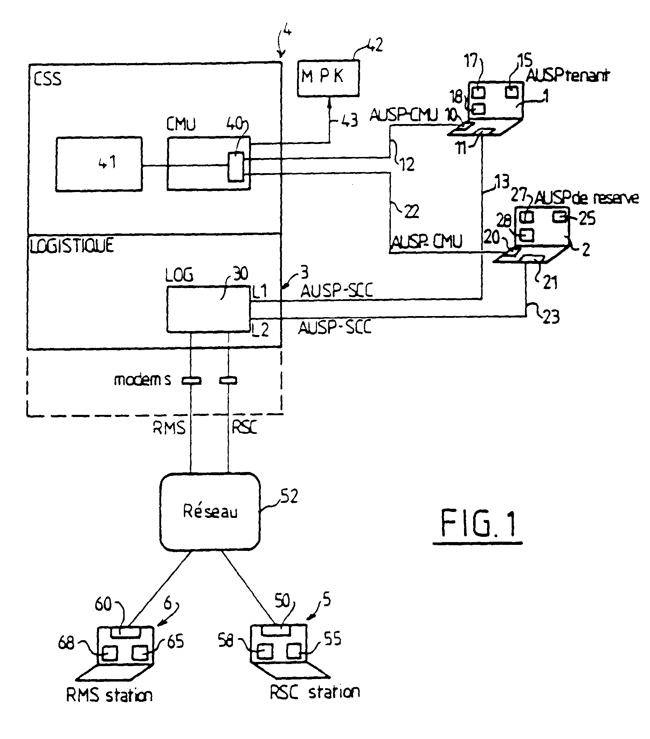

L'architecture du système est constituée comme représenté à la figure 1 par un processeur de service tenant (1), relié par un logiciel d'interface (10) MSH (Maintenance Station Handler) avec une ligne de traitement de la maintenance des stations de télécommunication (12) formant un réseau de type STARLAN. Cette ligne (12) est reliée à une unité d'horloge et de maintenance CMU (40) qui assure les communications entre le processeur de service (1), un deuxième processeur de service de réserve (2), par l'intermédiaire d'une deuxième ligne (22), et un système central (41). L'unité de maintenance et d'horloge (CMU) communique également par une ligne (43) avec un ensemble de processeurs de maintenance (42). Le processeur de service tenant (1) et le processeur de service de réserve (2) communiquent également par l'intermédiaire d'une interface de gestion de lignes éloigné (11) RLH (Remote Line Handler), et respectivement (21), avec un commutateur de console de service (3), qui permet par l'intermédiaire d'un circuit (30), et d'une matrice de commutation appropriée, de mettre en communication chacun des processeurs de service avec le réseau de télécommunication d'un pays donné, et à travers ce réseau avec une station (5) constituant une console de service éloignée communiquant avec ce réseau (52) par l'intermédiaire d'un logiciel d'interface RSC (50). De même, chacun des processeurs de service peut être mis en communication, à travers le réseau (52), avec une station de maintenance éloignée (6) communiquant avec le réseau (52) par un logiciel d'interface RMS (51). Les lignes (23) et (13) reliées au commutateur de console de service par les logiciels d'interface (21) et (11) ont des débits de 4.800 bauds, tandis que les lignes (12) et (22) formant le réseau "STARLAN" avec l'unité d'horloge et de maintenance (40) ont des débits de l'ordre du mégabit par seconde. Les processeurs de maintenance (42) sont reliés à des ensembles d'unités d'entrée-sortie pour le système central.

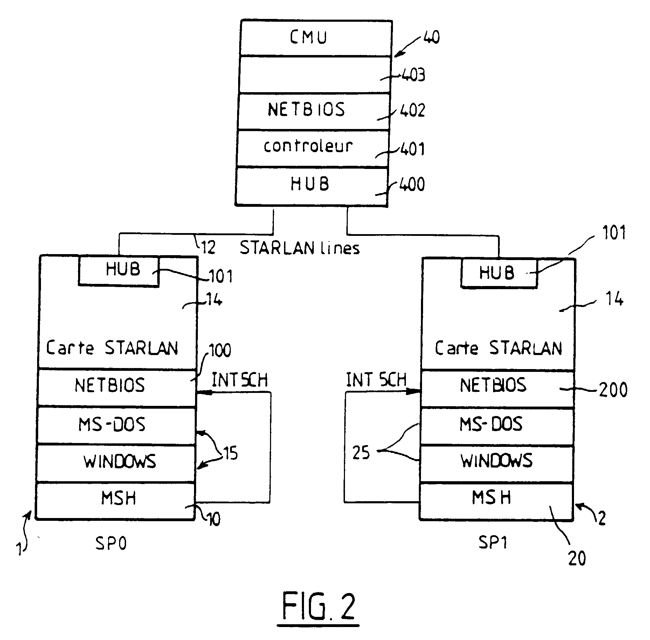

La figure 2 représente l'environnement logiciel permettant aux processeurs de service (1, 2) de communiquer par le réseau "STARLAN" avec l'unité de maintenance CMU (40). Le processeur de service tenant comporte en plus du logiciel MSH (10) et d'un système d'exploitation comportant le système d'exploitation du disque MS-DOS, un logiciel multitâches à fenêtre tel que WINDOWS, et une partie de logiciel que l'on décrira ultérieurement. Le processeur de service tenant comporte également un logiciel de communication "NETBIOS" (100) communiquant à travers une carte de réseau type "STARLAN" (14) et un élément de hardware (101) constituant une passerelle (HUB), à travers la ligne (12) du réseau STARLAN, vers une deuxième passerelle (400), un circuit de gestion (401), un logiciel d'interface avec le réseau STARLAN "NETBIOS" (402) et un logiciel d'interface (403) avec le processeur de service RSPI. De façon similaire, le processeur de service de réserve (2) comportera également les mêmes éléments, mais avec le chiffre 2 comme référence pour le chiffre des dizaines ou des centaines. Chaque processeur de service comporte en plus de son système d'exploitation (15, 25) un programme corps pour une application donnée (17, 27, fig. 1) et un programme présentation de l'application (18, 28, fig. 1).

Un logiciel superviseur SPV gère les numéros d'instance des services installés et démarre les services. Les processeurs de service tenant et de réserve s'initialisent séparément en parallèle. La différence entre un processeur de service de réserve et un processeur se service tenant est que le processeur de service tenant accepte le lancement de services alors que le processeur de service de réserve attend un événement de la CMU lui disant de devenir tenant. Ainsi, le superviseur SPV du processeur de service tenant (1) envoie, par l'intermédiaire de la CMU un événement au deuxième processeur de service (2) en cas de défaillance du premier, ce qui permet à ce dernier d'instaurer les mêmes applications.

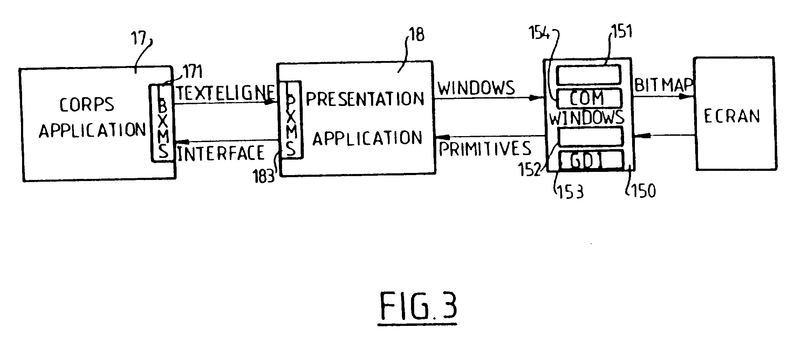

La figure 3 représente le principe d'une architecture nécessaire à la mise en oeuvre de l'invention dans laquelle le programme corps (17) d'une application donnée, tournant par exemple sur le processeur de service tenant, échange des lignes de texte et des messages d'acquittement ou de réponse avec le programme de présentation (18) de l'application. Ces échanges de messages et de lignes de texte se font par l'intermédiaire de modules de bibliothèque de gestion des messages LBXMS (171) et LPXMS (183) qui se trouvent liés respectivement au corps de l'application pour LBXMS, et à la présentation de l'application pour LPXMS. Le programme de présentation de l'application échange avec le logiciel WINDOWS (150), les primitives nécessaires à la gestion des tâches et à l'affichage des fenêtres. L'application présentation aura été développée à l'aide du programme WINDOWS (150) qui peut être vu comme un jeu de quatre composants. Un premier composant noyau (Kernel) (151) assurant la gestion des tâches, les allocations de mémoire, la fonction horloge (TIMER) et les liens dynamiques. Un deuxième élément (152) utilisateur (USER) servant à assurer la gestion des fenêtres et la création de celles-ci. Un troisième élément (GDI) (153) permet de réaliser les fonctions graphiques en vue d'effectuer des dessins, un quatrième élément (154) COM qui est un driver WINDOWS, permet de gérer des lignes asynchrones du type RS 232 et un protocole d'échange de données entre applications DDE (échange dynamique de données) permet la communication entre applications.

La communication avec des lignes de texte permet de réduire la densité des informations par rapport à une communication constituée par un jeu de primitives WINDOWS, qui sont utilisées pour générer un écran, et par conséquent, accélère les échanges.

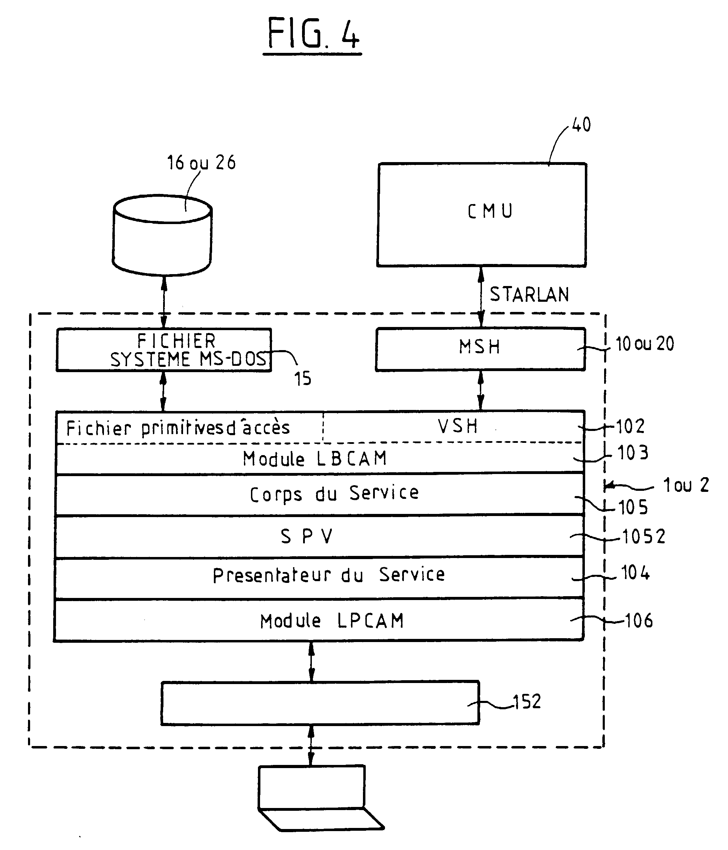

La figure 4 représente les logiciels nécessaires à la mise en place de moyens permettant l'échange dynamique de processeur de service. La CMU (40) est connectée par une connexion de type STARLAN au logiciel MSH (10) ou (20) selon qu'il appartient au processeur de service tenant ou de réserve. L'application MSH dialogue avec une librairie (ou un utilitaire) VSH (VMP Object Sequence Handler) de traitement de séquence objet du programme VMP constituant le panneau de maintenance virtuel (Virtual Maintenance Panel). Le service SYC appelle CAM (méthode d'accès au fichier CMU) pour mettre à jour les fichiers IRT. CAM lui-même appelle VSH pour exécuter des VOS (séquences d'objets virtuels) pour aller sauver les fichiers dans la mémoire (400, 401) de la CMU et le disque dur du processeur de service tenant (16) ou de réserve (26). Cet utilitaire comporte deux modules ; l'un LBCAM qui est le "corps", l'autre LPCAM qui le "module de présentation" correspondant et dialoguant avec le logiciel WINDOWS User (152) pour assurer la présentation à l'écran. Le corps du service (105) peut être le corps du programme du panneau de maintenance virtuel (VMP) et la présentation du service (104) peut être la présentation VMP. Le panneau de maintenance (VMP) permet d'utiliser des commandes spécifiques, de visualiser dynamiquement des ressources sélectionnées, construire et compiler des directives et de les exécute, d'afficher la liste des fichiers, d'utiliser un tuteur pour construire champ par champ une ligne de commandes et permettre des opérations telles que lecture-écriture de registres, lecture-écriture de mémoires, etc.

LBCAM (103) permet d'accéder, grâce au fichier du système MS-DOS (15), au disque dur (16), soit en lecture, soit en écriture selon le cas.

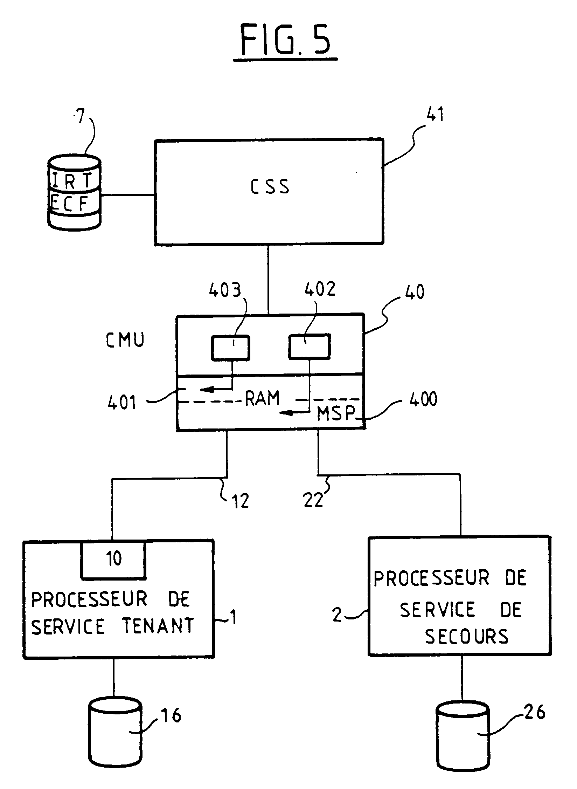

L'architecture nécessaire au processus d'échange dynamique de processeur de service est représentée à la figure 5 dans laquelle le disque (7), disque du système, où se trouvent entre autre les fichiers de configuration (IRT, ECF, RCFT, ROLST, R1LST, EX.LST et DG.LST) et les microprogrammes fonctionnels du processeur du CSS. Au cours de l'initialisation du système, les fichiers du disque (7) sont chargés dans la mémoire du CSS (41) et le programme d'initialisation va charger les deux fichiers de configuration IRT et ECF dans la mémoire du CSS (41), dans le disque dur (16) de la AUSP(1) d'une part, et d'autre part dans la mémoire (400) de la CMU (40). La mémoire de la CMU comporte deux parties, une (401), l'autre (400) appelée MSP, chacune d'une taille de un mégaoctet. La partie (401) est uniquement accessible par le processeur (403) de la CMU, tandis que la partie MSP (400) est accessible par le coprocesseur (402) ADMA. Ce coprocesseur (402) a un champ d'adresses qui lui permet d'accéder aux adresses d'un méga à deux mégaoctets, alors que le processeur (403) a un champ d'adresses permettant d'accéder aux adresses de zéro à un mégaoctet. L'espace MSP est spécialement réservé à l'usage du processeur de service (1) et permet entre autre de stocker les fichiers IRT et ECF. L'espace mémoire MSP est géré et organisé par le processeur de service (1)
et subdivisé en trois zones principales ;
- un premier mot contenant une valeur donnant la longueur actuelle de la mémoire MSP. Ce mot est mis à jour par la CMU et a un attribut d'accès en lecture seulement pour le processeur de service (1) ;
- une seconde zone est constituée par le répertoire contenant les étiquettes des fichiers, ce répertoire étant créé et mis à jour par le corps de l'application méthode d'accès à la CMU (LBCAM) ;
- un champ de données contenant les données des fichiers.

Cette architecture permet d'utiliser le processeur de service de réserve ( 2) en tant que station permettant de faire tourner la présentation d'une application, tout en autorisant une reprise en main du système par le superviseur du processeur de service de réserve (2), au cas où le processeur de service tenant viendrait à défaillir.

Dans un tel cas, le superviseur SPV (1052) du processeur de service tenant (1) demande le lancement sur le processeur de service de réserve (2) de l'application corps en cours d'exécution sur le processeur de service tenant (1) avec ou sans interruption de la présentation en cours, selon le cas.

Pour ce faire, la table de configuration du système, qui dans l'état de l'art était stockée sur le disque du processeur de service tenant, est, pour les besoins de l'invention, à l'initialisation du système généré sur un disque (7) du système et non sur un disque du processeur de service, puis la table de configuration est transférée vers le processeur de service (1) lors de la première initialisation du système.

Le processeur de service (1) copie cette table dans la partie (MSP) de la RAM (400) de la plaque d'interface matériel (40) qui devient la référence, c'est-à-dire que le processeur de service (1) accède la RAM lorsqu'il utilise la table de configuration. Les deux processeurs de service ont chacun un chemin d'accès vers cette RAM.

Enfin, cette table est copiée en parallèle sur un fichier du disque (10) processeur de service tenant (1) pour pouvoir éventuellement réinitialiser la RAM (400) lorsque la plaque d'interface matériel (40) a été, pour une raison quelconque, mise hors tension.

Cette architecture permet de procéder à un échange dynamique de processeur de service. A la connexion d'un nouveau processeur de service, celui-ci copie la table de configuration de la RAM vers son disque. La même opération est effectuée lorsqu'on bascule du processeur de service tenant (1) au processeur de service de réserve (2).

Chaque fois qu'un accès à un fichier est demandé, le logiciel CAM accède au fichier d'étiquettes du répertoire de la CMU pour déterminer si un fichier est contenu ou non. Le format d'étiquette de fichier est constitué par les bits 0 à 7 pour le nom de fichier, par les bits 8 à 10 pour le nom d'un fichier d'extension, par le bit 11 pour désigner si l'espace alloué est fixe ou variable, par les bits 12 à 15 pour indiquer l'espace alloué en nombre d'octets, par les bits 16 à 19 pour indiquer la taille actuelle du fichier en nombre d'octets, par les bits 20 à 23 pour indiquer l'adresse de commencement du fichier, par les bits 24 à 29 pour indiquer la date de création. Enfin, les bits 30 et 31 constituent un drapeau initialisé à zéro et mis à la valeur -1 chaque fois que le fichier est en cours d'écriture. Une fois la session d'écriture terminée, le drapeau est remis à zéro. Ceci constitue une protection contre les fins d'écriture anormales. Si le drapeau n'est pas à zéro quand l'application demande à CAM de lire un fichier, cela signifie que la session d'écriture précédente ne s'est pas exécutée correctement et que le fichier est invalide. Dans ce cas, le module CAM renvoie le code "fichier non trouvé". Dans le cas où le nom d'un fichier n'est pas trouvé par CAM lorsqu'on lui demande d'accéder à un certain fichier, ce dernier renvoie le code "fichier inconnu". Après lecture du répertoire, la méthode d'accès CAM renvoie le message suivant "fichier non trouvé" dans le cas où le fichier n'est présent, ni dans la mémoire de la CMU, ni dans le disque dur du processeur de service tenant. Dans le cas où le fichier est présent en mémoire de la CMU, mais pas dans le disque dur du processeur de service, la méthode d'accès renvoie le message "mémoire CMU.mise à jour du disque dur". Dans le cas inverse, la méthode d'accès renvoie le message "disque dur-processeur de service.mise à jour de la CMU".

Dans le cas où les fichiers sont présents dans la mémoire CMU et dans le disque dur, la méthode d'accès renvoie le message "mémoire CMU". Chaque fois que cela est nécessaire, la méthode d'accès procède à la mise à jour de l'élément correspondant. Outre les fichiers ECF et IRT pour les processeurs de service de réserve et tenant, la méthode d'accès gère également la table de reconfiguration du système, les listes de réservation ROLST, R1LSI pour les processeurs de service tenant et de réserve, la liste d'exclusion EX.LST et la liste de diagnostic DG.LST, ainsi que les paramètres d'initialisation des processeurs de service S0 et S1 contenus dans le fichier INIT PAR.

## Revendications

1. Dispositif pour échange dynamique de processeur de service, comportant un premier processeur de service relié par un réseau et une unité de maintenance (CMU) à un système central (4), ledit processeur de service (1) est relié à un deuxième processeur de service (2) par le réseau et l'unité de maintenance (CMU), caractérisé en ce que chaque processeur de service comporte en plus des programmes de système d'exploitation, un programme superviseur et au moins un service décomposé en deux applications, l'une "corps" composée de l'algorithme du programme, l'autre "présentation" comportant l'interface avec l'opérateur permettant un affichage du type à fenêtres avec une barre de menu, et des moyens (MSH 10, 20) de traitement des communications avec les autres processeurs de service, par l'intermédiaire de l'unité de maintenance (CMU), un programme superviseur gérant les numéros d'instance des services et démarrant les services, ledit programme superviseur ayant accès à une table de configuration du système (IRT, ECF), l'unité de maintenance (CMU) comprend une mémoire vive (400) qui communique par l'intermédiaire du système central avec un moyen de stockage (7) du système central qui contient la table de configuration du système (IRT, ECF), et en ce que le superviseur du processeur de service tenant et du processeur de service de réserve contient une routine (LBCAM) de méthode d'accès à l'unité de maintenance (CMU) pour accéder à la table de configuration du système contenue dans le moyen de stockage du système central, la transférer dans son propre disque (16) et la charger dans la mémoire vive (400) de l'unité de maintenance (CMU).

2. Dispositif selon la revendication 1, caractérisé en ce que le programme superviseur du processeur de service de réserve (2) contient une routine pour, en cas de défaillance du processeur de service tenant (1)signalée par un événement envoyé par l'unité de maintenance (CMU) au processeur de service de réserve (2), lancer le programme superviseur du processeur de service de réserve (2), et par la routine de méthode d'accès (LBCAM) effectuer la lecture de la table de configuration (IRT, ECF) dans la mémoire vive (400) de l'unité de maintenance (CMU) pour la recopier dans le disque dur (26) du processeur de service de réserve (2).

3. Dispositif selon la revendication 2, caractérisé en ce que la mémoire vive est divisée en deux parties, une première, accessible uniquement par un processeur (403) de l'unité de maintenance (CMU), une seconde, (MSP), accessible uniquement par un coprocesseur (402) de l'unité de maintenance (CMU) en exécution de messages envoyés par la routine (LBCAM) de méthode d'accès de l'unité de maintenance (CMU) lancée par un service tournant sur le processeur de service (1).

4. Dispositif selon la revendication 3, caractérisé en ce que la seconde partie (MSP, 400) de la mémoire de l'unité de maintenance (CMU) est divisée en trois zones :
- une première contenant un mot indiquant la longueur actuelle de la mémoire ;
- une deuxième zone répertoire contenant les étiquettes des dossiers ;
- une troisième contenant les données.

5. Dispositif selon la revendication 4, caractérisé en ce que les étiquettes de la deuxième zone comprennent le nom du fichier, son espace alloué, sa date de création, sa taille actuelle,
une information indiquant si l'espace alloué est fixe ou variable,
et un drapeau, dont la valeur 1 indique une session d'écriture non valablement exécutée.

6. Dispositif selon la revendication 5, caractérisé en ce que la routine de la méthode d'accès (LBCAM) affiche le message "fichier non trouvé" dans le cas où le drapeau était à la valeur 1 et procède à la recopie du fichier soit de l'unité de maintenance (CMU) dans le disque, soit en sens inverse.

7. Dispositif selon la revendication 5, caractérisé en ce que la routine de la méthode d'accès (LBCAM) affiche le message "fichier inconnu" dans le cas où le nom du fichier n'existe pas dans le répertoire de l'unité de maintenance (CMU) et procède à sa recopie du disque dur (16) vers la mémoire de l'unité de maintenance (CMU) s'il existe dans le disque dur (16) du processeur de service (1).

8. Dispositif selon la revendication 7, caractérisé en ce que les fichiers gérés par la méthode d'accès de l'unité de maintenance (CMU) sont recopiés du disque dur (16) vers la mémoire vive (400) de l'unité de maintenance (CMU) lorsque la plaque d'interface matériel a été mise hors tension.

9. Dispositif selon la revendication 7, caractérisé en ce que les fichiers gérés par la méthode d'accès de l'unité de maintenance (CMU) sont recopiés de la mémoire vive (400) de l'unité de maintenance (CMU) vers le disque dur (16, 26) d'un processeur de service (1, 2), lorsque le processeur de service est initialisé.

## Patentansprüche

1. Vorrichtung für dynamischen Wechsel des Dienstprozessors, mit einem ersten Dienstprozessor, der über ein Netz und eine Wartungseinheit (CMU) mit einem Zentralsystem (4) verbunden ist, wobei der Dienstprozessor (1) über das Netz und die Wartungseinheit (CMU) mit einem zweiten Dienstprozessor (2) verbunden ist, dadurch gekennzeichnet, daß jeder Dienstprozessor außerdem Betriebssystem-Programme, ein Überwachungsprogramm und wenigstens einen Dienst, der in zwei Anwendungen zerlegt ist, wovon eine, der "Körper", aus dem Algorithmus des Programms aufgebaut ist, und die andere, die "Darstellung", die Schnittstelle mit der Bedienungsperson enthält, die eine Anzeige des Typs mit Fenstern mit einer Menüleiste ermöglicht, sowie Mittel (MSH 10, 20) für die Verarbeitung des Informationsaustausches mit den anderen Dienstprozessoren über die Wartungseinheit (CMU) enthält, wobei ein Überwachungsprogramm die Nummern der Anforderungen der Dienste verwaltet und die Dienste beginnt, wobei das Überwachungsprogramm Zugriff auf eine Konfigurationstabelle des Systems (IRT, ECF) hat, wobei die Wartungseinheit (CMU) einen Schreib-Lese-Speicher (400) enthält, der über das Zentralsystem mit einem Speichermittel (7) des Zentralsystems, das die Konfigurationstabelle des Systems (IRT, ECF) enthält, Informationen austauscht, und daß das Überwachungsprogramm des Hauptdienstprozessors und des Reservedienstprozessors eine Routine (LBCAM) für die Zugriffsmethode auf die Wartungseinheit (CMU) enthält, um auf die im Speichermittel des Zentralsystems enthaltene Konfigurationstabelle des Systems zuzugreifen, sie an seine eigene Platte (16) zu übertragen und sie in den Schreib-Lese-Speicher (400) der Wartungseinheit (CMU) zu laden.

2. Vorrichtung nach Anspruch 1, dadurch gekennzeichnet, daß das Überwachungsprogramm des Reservedienstprozessors (2) eine Routine enthält, die bei einem Ausfall des Hauptdienstprozessors (1), der durch ein von der Wartungseinheit (CMU) zum Reservedienstprozessor (2) geschicktes Ereignis gemeldet wird, das Überwachungsprogramm des Reservedienstprozessors (2) startet und über die Routine der Zugriffsmethode (LBCAM) das Lesen der Konfigurationstabelle (IRD, ECF) im Schreib-Lese-Speicher (400) der Wartungseinheit (CMU) ausführt, um sie auf die Festplatte (26) des Reservedienstprozessors (2) zu kopieren.

3. Vorrichtung nach Anspruch 2, dadurch gekennzeichnet, daß der Schreib-Lese-Speicher in zwei Teile unterteilt ist, einen ersten Teil, auf den ausschließlich der Prozessor (403) der Wartungseinheit (CMU) zugreifen kann, und einen zweiten Teil (MSP), auf den ausschließlich ein Coprozessor (402) der Wartungseinheit (CMU) zugreifen kann, wenn Nachrichten ausgeführt werden, die von der Routine (LBCAM) der Zugriffsmethode der Wartungseinheit (CMU), die durch einen auf dem Dienstprozessor (1) ablaufenden Dienst gestartet wird, geschickt werden.

4. Vorrichtung nach Anspruch 3, dadurch gekennzeichnet, daß der zweite Teil (MSP, 400) des Speichers der Wartungseinheit (CMU) in drei Zonen unterteilt ist:
- eine erste, die ein Wort enthält, das die tatsächliche Länge des Speichers angibt;
- eine zweite Übersichtszone, die die Kennzeichnungen der Dateien enthält;
- eine dritte, die die Daten enthält.

5. Vorrichtung nach Anspruch 4, dadurch gekennzeichnet, daß die Kennzeichnungen der zweiten Zone den Namen der Datei, ihren zugewiesenen Platz, ihr Erzeugungsdatum, ihre tatsächliche Größe,
eine Information, die angibt, ob der zugewiesene Raum fest oder variabel ist,
und einen Merker enthalten, dessen Wert 1 eine nicht richtig ausgeführte Schreibsitzung angibt.

6. Vorrichtung nach Anspruch 5, dadurch gekennzeichnet, daß die Routine der Zugriffsmethode (LBCAM) die Nachricht "Datei nicht gefunden" in dem Fall anzeigt, in dem der Merker den Wert 1 hatte, und das Kopieren der Datei entweder von der Wartungseinheit (CMU) auf die Platte oder umgekehrt vornimmt.

7. Vorrichtung nach Anspruch 5, dadurch gekennzeichnet, daß die Routine der Zugriffsmethode (LBCAM) die Nachricht "Datei unbekannt" in dem Fall anzeigt, in dem der Name der Datei in der Übersicht der Wartungseinheit (CMU) nicht vorhanden ist, und deren Kopie von der Festplatte (16) zum Speicher der Wartungseinheit (CMU) ausführt, falls sie auf der Festplatte (16) des Dienstprozessors (1) vorhanden ist.

8. Vorrichtung nach Anspruch 7, dadurch gekennzeichnet, daß die von der Zugriffsmethode der Wartungseinheit (CMU) verwalteten Dateien von der Festplatte (16) zum Schreib-Lese-Speicher (400) der Wartungseinheit (CMU) kopiert werden, wenn die Spannung der Hardware-Schnittstellenkarte unterbrochen worden ist.

9. Vorrichtung nach Anspruch 7, dadurch gekennzeichnet, daß die von der Zugriffsmethode der Wartungseinheit (CMU) verwalteten Dateien vom Schreib-Lese-Speicher (400) der Wartungseinheit (CMU) zur Festplatte (16, 26) eines Dienstprozessors (1, 2) kopiert werden, wenn der Dienstprozessor initialisiert wird.

## Claims

1. A device for dynamic interchange between service processors, comprising a first service processor connected via a network and a maintenance unit (CMU) to a central system (4), said service processor (1) is connected to a second service processor (2) via the network and the maintenance unit (CMU), characterised in that each service processor further comprises operating system programs, a supervisory program and at least one service broken down into two applications, one being the "body" composed of the algorithm of the program, the other being the "presentation" comprising the interface with the operator allowing a windows-type display with a menu bar, and means (MSH, 10, 20) for processing communications with the other service processors, via the maintenance unit (CMU), a supervisory program managing the tag numbers of the services and starting the services, said supervisory program having access to a system configuration table (IRT, ECF), the maintenance unit (CMU) comprises a random access memory (400) that communicates via the central system with a storage means (7) of the central system which contains the system configuration table (IRT, ECF), and in that the supervisor of the holding service processor and the reserve service processor contains a routine (LBCAM) for a method of access to the maintenance unit (CMU) in order to access the system configuration table contained in the storage means of the central system, to transfer it onto its own disk (16) and to load it into the random access memory (400) of the maintenance unit (CMU).

2. A device according to Claim 1, characterised in that the supervisory program of the reserve service processor (2) contains a routine which, in the case of a failure of the holding service processor (1) signalled by an event sent by the maintenance unit (CMU) to the reserve service processor (2), launches the supervisory program of the reserve service processor (2) and, by the access method routine (LBCAM), reads the configuration table (IRT, ECF) in the random access memory (400) of the maintenance unit (CMU) in order to copy it over to the hard disk (26) of the reserve service processor (2).

3. A device according to Claim 2, characterised in that the random access memory is divided into two portions, a first one accessible solely by a processor (403) of the maintenance unit (CMU), a second one (MSP) accessible solely by a coprocessor (402) of the maintenance unit (CMU) while executing messages sent by the routine (LBCAM) for the access method of the maintenance unit (CMU) initiated by a service running on the service processor (1).

4. A device according to Claim 3, characterised in that the second portion (MSP,400) of the memory of the maintenance unit (CMU) is divided into three zones:
- a first one containing a word indicating the current length of the memory;
- a second directory zone containing the file labels;
- a third one containing the data.

5. A device according to Claim 4, characterised in that the labels of the second zone comprise the name of the file, its assigned space, its creation date, its current size,
information indicating whether the assigned space is fixed or variable,
and a flag, the value 1 of which indicates a writing session where execution was not valid.

6. A device according to Claim 5, characterised in that the access method routine (LBCAM) displays the message "file not found" in the case where the flag had the value 1 and proceeds to copy over the file either from the maintenance unit (CMU) to the disk, or vice versa.

7. A device according to Claim 5, characterised in that the access method routine (LBCAM) displays the message "file not known" in the case where the filename does not exist in the directory of the maintenance unit (CMU) and proceeds to copy it over from the hard disk (16) to the memory of the maintenance unit (CMU) if it exists on the hard disk (16) of the service processor (1).

8. A device according to Claim 7, characterised in that the files managed by the access method of the maintenance unit (CMU) are copied over from the hard disk (16) to the random access memory (400) of the maintenance unit (CMU) when the hardware interface plate has been disconnected from voltage.

9. A device according to Claim 7, characterised in that the files managed by the access method of the maintenance unit (CMU) are copied over from the random access memory (400) of the maintenance unit (CMU) to the hard disk (16, 26) of a service processor (1, 2), when the service processor is initialised.
